# EUROPÄISCHE PATENTSCHRIFT

(11) **EP 3 084 919 B1**
(45) Veröffentlichungstag und Bekanntmachung des Hinweises auf die Patenterteilung: **22.01.2020**
(21) Anmeldenummer: 14811852.4
(22) Anmeldetag: 10.12.2014
(51) Int. Cl.: H02J 7/02

(54) **ANORDNUNG EINER INDUKTIONSSPULE AN EINEM UNTERBODEN EINES KRAFTWAGENS**
ARRANGEMENT OF AN INDUCTIVE COIL AT THE UNDERBODY OF A MOTOR VEHICLE
FIXATION D'UNE BOBINE D'INDUCTION SUR LE DESSOUS DE CAISSE D'UN VÉHICULE

(30) Priorität: 20.12.2013 DE 102013226830
(43) Veröffentlichungstag der Anmeldung: 26.10.2016
(73) Patentinhaber: Bayerische Motoren Werke Aktiengesellschaft, 80809 München (DE)
(72) Erfinder: HERZOG, Torsten, 80796 München (DE); NURTSCH, Bernd, 83555 Gars-Bahnhof (DE); BIRKHOLZ, Andreas, 81929 München (DE)
(86) Internationale Anmeldenummer: PCT/EP2014/077191
(87) Internationale Veröffentlichungsnummer: WO 2015/091142

(56) Entgegenhaltungen:
- DE-A1-102010 028 428
- DE-A1-102010 042 395
- DE-A1-102011 001 633
- DE-A1-102011 054 541
- DE-A1-102011 108 544
- DE-A1-102012 103 322
- US-A- 4 800 328
- US-A1- 2010 065 352
- US-A1- 2011 181 240

## Beschreibung

Die Erfindung betrifft einen Kraftwagen mit wenigstens einer Induktionsspule zum induktiven Laden eines Energiespeichers an einem Unterboden eines Kraftwagens.

Derartige Induktionsspulen eignen sich besonders gut zum berührungslosen Laden beispielsweise einer Fahrzeugbatterie (Energiespeicher), wobei es lediglich erforderlich ist, den Kraftwagen über einen längeren Zeitraum über einer ein sich änderndes Magnetfeld emittierenden Ladevorrichtung zu platzieren, um den Energiespeicher zu laden. Derartige Ladevorrichtungen können beispielsweise an öffentlichen Parkplätzen vorgesehen sein, wobei bestimmte Parkzeiten von mit einer solchen Induktionsspule ausgestatteten Kraftwagen genutzt werden, um den Energiespeicher (Fahrzeugbatterie) während des Parkens des Kraftwagens zu laden. Gerade im Vergleich zum Tankvorgang beim Betanken von Kraftwagen mit fossilen Brennstoffen ergeben sich dann sowohl Vorteile darin, dass keine spezielle Tankstelle aufgesucht werden muss um den Energiespeicher zumindest teilweise zu füllen, als auch, dass das Laden des Energiespeichers berührungslos erfolgt und dementsprechend besonders ergonomisch und ohne weiteres Zutun durch den Fahrer vonstattengehen kann. Des Weiteren werden gerade im Gegensatz zum Betanken mit fossilen Brennstoffen während des Tankvorgangs, beziehungsweise während des Ladens des Energiespeichers keine Kraftstoffdämpfe freigesetzt und dementsprechend ein besonders großer Beitrag zum Umweltschutz beziehungsweise zum Gesundheitsschutz geleistet. So ist es beispielsweise bekannt, dass üblicherweise beim Tankvorgang mit fossilen Brennstoffen freigesetzte Kohlenwasserstoffverbindungen als Benzindämpfe beziehungsweise Dieseldämpfe aufsteigen können, wobei derartige Dämpfe als umweltschädlich beziehungsweise krebserregend einzustufen sind.

Die am Unterboden angeordnete Induktionsspule derartiger zum induktiven Laden ausgelegter Kraftwagen wird auch als sogenannte Sekundärspule oder als CPM (Car Pad Module) bezeichnet. Wird dieser Kraftwagen nun über einer Ladevorrichtung zum induktiven Laden des Energiespeichers des Kraftwagens geparkt, so wird eine sogenannte Primärspule der Ladevorrichtung an die an dem Unterboden des Kraftwagens angeordnete Sekundärspule herangeführt, relativ zu dieser Sekundärspule ausgerichtet und ein sich mit einer bestimmten Frequenz änderndes Magnetfeld mittels der Primärspule aufgebaut. Durch dieses sich ändernde Magnetfeld wird unter Vermittlung der Sekundärspule der Energiespeicher (Fahrzeugbatterie beziehungsweise Hochvoltbatterie) des Kraftwagens geladen. Je näher dabei die Primärspule an die Sekundärspule des Kraftwagens herangeführt wird, beziehungsweise je exakter die Primärspule relativ zu der Sekundärspule ausgerichtet wird, desto effizienter ist auch der Ladevorgang.

Aus der US 2011/0181240 A1 ist bereits ein Kraftwagen mit wenigstens einer Induktionsspule zum induktiven Laden eines Energiespeichers bekannt, wobei die Induktionsspule an einem Unterboden des Kraftwagens angeordnet ist, und nach zumindest teilweise mit wenigstens einem Abdeckelement überdeckt ist.

Ferner ist aus der DE 10 2011 054 541 A1 eine Vorrichtung zur induktiven Übertragung elektrischer Energie bekannt.

Aufgabe der vorliegenden Erfindung ist es, einen Kraftwagen mit wenigstens einer Induktionsspule am Unterboden des Kraftwagens zu schaffen, die besonders gut vor Beschädigungen geschützt ist.

Diese Aufgabe wird durch einen Kraftwagen mit wenigstens einer Induktionsspule mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Um einen Kraftwagen der im Oberbegriff des Patentanspruchs 1 angegebenen Art zu schaffen, ist es erfindungsgemäß vorgesehen, dass die Induktionsspule nach unten zumindest teilweise durch wenigstens ein Abdeckelement überdeckt ist. Dabei ist die Induktionsspule an einem Unterbodenschutzelement eines Unterbodens des Kraftwagens angebracht. Entlang der in Fahrzeugquerrichtung gegenüberliegenden Seiten des Unterbodenschutzelements sind zusätzlich sich in Fahrzeuglängsrichtung erstreckende und nach unten überragende Kufen an dem Unterboden angeordnet.

Mittels dieses Abdeckelements kann vermieden werden, dass die Induktionsspule des Kraftwagens, also die Sekundärspule während der Fahrt, beispielsweise durch Fremdeinwirkung auf Schlechtwegstrecken beschädigt wird, beziehungsweise größere Mengen an Spritzwasser beziehungsweise im Winter salzhaltiges Wasser an elektronische Komponenten wie die Induktionsspule gelangen. Somit wird also durch das Abdeckelement vermieden, dass die Induktionsspule beschädigt wird beziehungsweise das Streufeld der Induktionsspule nachteilig in Folge von beispielsweise der Impaktion von Gegenständen wie beispielsweise Steinen oder Ästen, welche am Fahrzeugunterboden aufschlagen, beeinflusst beziehungsweise beeinträchtigt wird. Mittels des Abdeckelements kann also der Wirkungsgrad beim Laden des Energiespeichers (Hochvoltbatterie, Batterie) besonders weitgehend über die Fahrzeuglebensdauer aufrechterhalten werden, da etwaige Beschädigungen beziehungsweise Spritzwassereinflüsse auf die Induktionsspule mittels des Abdeckelements wirksam unterbunden werden. Das Abdeckelement kann beispielsweise aus einem Glasfaserkunststoff gebildet sein, wodurch das Magnetfeld beim induktiven Laden besonders wenig gestört wird, obwohl zwischen der Induktionsspule (Sekundärspule) des Kraftwagens und der Primärspule das Abdeckelement angeordnet ist. Der Wirkungsgrad des Ladevorgangs kann sogar noch verbessert werden, indem zum Beispiel an dem Abdeckelement ein Feldführungsbereich mit jeweiligen Feldführungselementen angeordnet ist, wobei diese Feldführungselemente sogenannten Ferriten entsprechen. So ist beispielsweise also ein bestimmter Bereich (Feldführungsbereich) des Abdeckelements in besonderem Maße dazu ausgelegt, das Magnetfeld beim induktiven Laden wirkungsgradoptimal auszurichten, wobei neben dem Magnetfeld auch ein elektrisches Feld, welches mit dem Magnetfeldaufbau einhergeht, positiv beeinflusst wird. Das Abdeckelement kann jedoch auch zur lediglich teilweisen Überdeckung der Induktionsspule des Kraftwagens verwendet werden und beispielsweise einen offenen Rahmenbereich aufweisen, in welchen die Primärspule beim Laden eingeführt wird und besonders zügig und exakt relativ zu der Induktionsspule des Kraftwagens arretiert, also ausgerichtet wird. Dies führt dazu, dass das induktive Laden besonders rasch erfolgen kann und dementsprechend besonders große Zeitersparnisse zu verzeichnen sind, da durch den offenen Rahmen ein Orientierungs-Hilfsmittel für die Ausrichtung der Primärspule geschaffen wird. Beim teilweisen Überdecken der Induktionsspule durch das Abdeckelement, also beispielsweise durch Verwendung eines solchen offenen Rahmens, welcher dann beispielsweise die Induktionsspule nach unten hin, also zur Aufstandsfläche des Kraftwagens hin überragt, kann die Impaktion von Schadgegenständen beziehungsweise eine etwaige Spritzwasserbeaufschlagung der Induktionsspule des Kraftwagens zumindest weitgehend unterbunden werden, wobei gleichzeitig eine besonders rasche Ausrichtung der Primärspule zu der Sekundärspule erfolgen kann.

Weitere Vorteile, Merkmale und Einzelheiten der Erfindung ergeben sich aus der nachfolgenden Beschreibung eines bevorzugten Ausführungsbeispiels sowie anhand der Zeichnungen.

Die Zeichnung zeigt in:

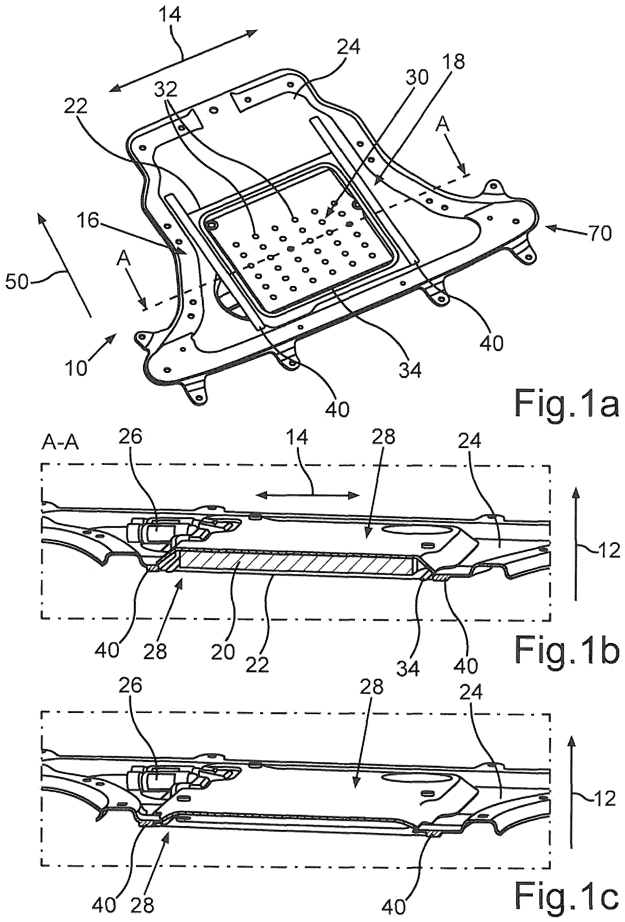

- Fig. 1 a:: eine Unteransicht auf einen Unterboden eines Kraftwagens, von welchem vorliegend lediglich ein Unterbodenschutzelement sowie ein eine Induktionsspule abdeckendes Abdeckelement gezeigt ist, wobei das Abdeckelement aus glasfaserverstärktem Kunststoff (GFK) ausgebildet ist;
- Fig. 1 b:: eine Schnittansicht gemäß einer Schnittlinie A-A aus Fig. 1 a des Unterbodenschutzelements;
- Fig. 1 c:: eine weitere Schnittansicht, in welcher die Induktionsspule vorliegend ausgeblendet ist und dementsprechend ein die Induktionsspule aufnehmender Aufnahmebereich erkennbar ist;
- Fig. 2:: eine weitere perspektivische Unteransicht auf das Unterbodenschutzelement sowie das Abdeckelement, welches vorliegend durch einen Rahmen umrandet ist;
- Fig. 3 a:: eine weitere perspektivische Unteransicht auf das Unterbodenschutzelement sowie das Abdeckelement, welches vorliegend einen Feldführungsbereich mit als Ferriten ausgebildeten Feldführungselementen aufweist;

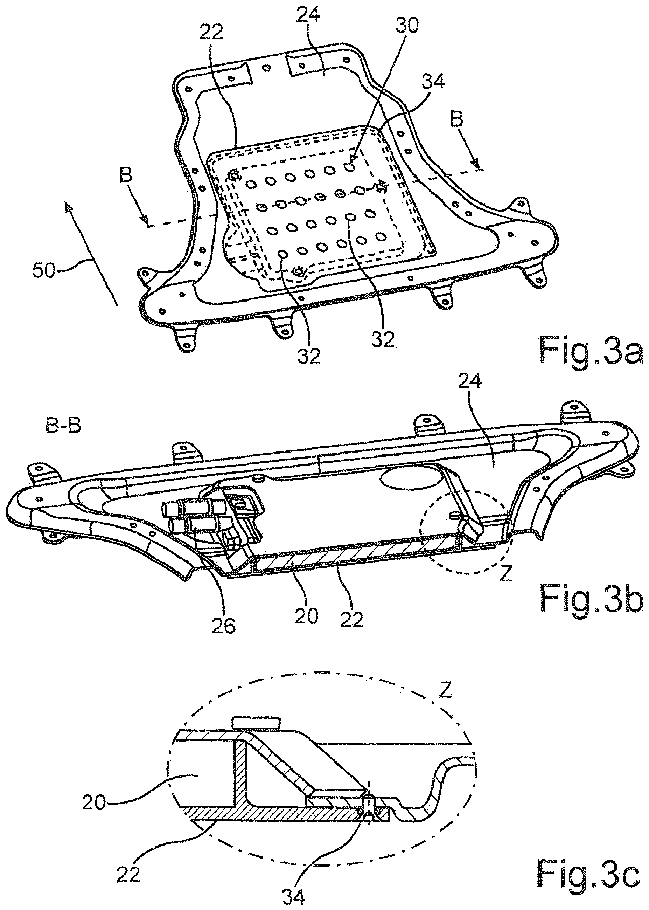

- Fig. 3 b:: eine Schnittansicht des in Fig. 3 a gezeigten Unterbodenschutzelements 24 gemäß einer Schnittlinie B-B;
- Fig. 3 c:: eine vergrößerte in Schnittansicht gezeigte Detailansicht gemäß eines in Fig. 3b umrandeten Bereichs Z des Unterbodenschutzelements 24;

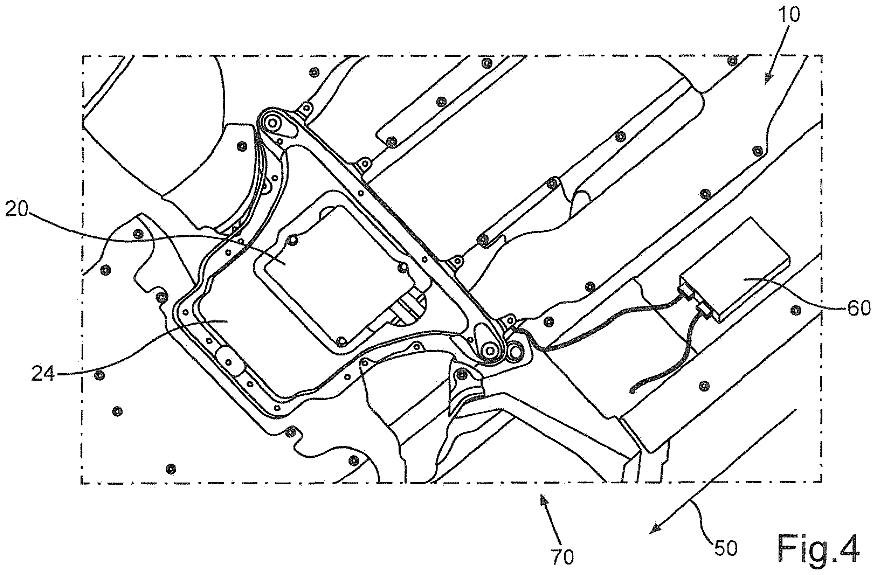

- Fig. 4:: eine ausschnittsweise Unteransicht auf den Unterboden des Kraftwagens, an welchem das Unterbodenschutzelement zum Schutz jeweiliger Komponenten des Kraftwagens fixiert ist; und

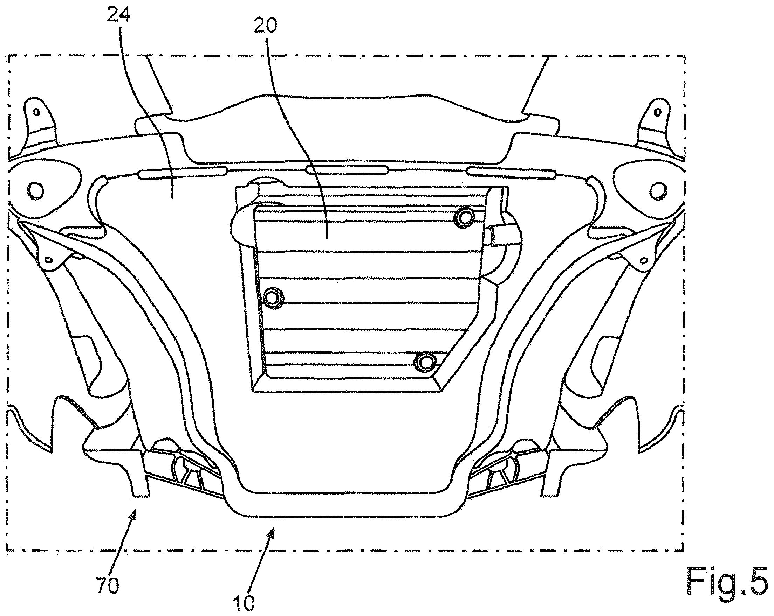

- Fig. 5:: eine weitere ausschnittsweise Unteransicht auf den Unterboden des Kraftwagens, wobei vorliegend die Induktionsspule nicht durch das Abdeckelement verdeckt wird.

Fig. 1 a zeigt in einer Unteransicht ein Unterbodenschutzelement 24, welches Bestandteil eines Unterbodens 10 eines Kraftwagens ist. Das Unterbodenschutzelement 24 wird bei zweiradbetriebenen Kraftwagen (mit einer angetriebenen Achse) als sogenannte Motorabschirmung und bei vierradgetriebenen Kraftwagen (Allradantrieb) als Schubfeld bezeichnet. Aufgrund erhöhter Stabilitätsanforderungen bei allradbetriebenen Kraftwagen ist das als Schubfeld ausgebildete Unterbodenschutzelement 24 massiver ausgebildet als die Motorabschirmung.

Fig. 1b und Fig. 1c zeigen jeweils Schnittansichten gemäß einer in Fig. 1 a verdeutlichten Schnittlinie A-A. Vor allem anhand von Fig. 1b ist erkennbar, dass am Unterboden 10 des Kraftwagens eine Induktionsspule 20 in Fahrzeughochrichtung 12 nach unten durch ein Abdeckelement 22 überdeckt ist. Die Induktionsspule 20 wird auch CPM (Car Pad Module) bezeichnet. Die Induktionsspule 20 ist vorliegend durch das Abdeckelement 22 vollständig überdeckt, es wäre jedoch auch denkbar, dass die Induktionsspule 20 durch das Abdeckelement 22 lediglich bereichsweise überdeckt ist. Bei der Induktionsspule 20 handelt es sich um eine sogenannte Sekundärspule, weiche mit dem Kraftwagen permanent mitgeführt wird und welche dazu verwendet wird, einen hier nicht weiter dargestellten Energiespeicher, zum Beispiel eine Hochvoltbatterie zur Energieversorgung eines den Kraftwagen antreibenden Elektromotors, mittels einer ebenfalls nicht dargestellten Primärspule, welche von unten an den Kraftwagen herangeführt wird und zumindest weitgehend deckungsgleich mit der Induktionsspule 20 orientiert wird, per Induktion zu laden. An die Induktionsspule 20 schließt das Unterbodenschutzelement 24 an, wobei das Unterbodenschutzelement 24 einen Aufnahmebereich 28 zumindest teilweise begrenzt, in welchem die Induktionsspule 20 aufgenommen ist. Der Aufnahmebereich 28 entspricht dabei einer Durchgangsöffnung beziehungsweise einer Mulde mit einem Bodenblech oder einem andersartigen flächigen Material, an welchem die Induktionsspule 20 fixiert ist. Mittels des Unterbodenschutzelements 24 können jeweilige Komponenten 26 des Kraftwagens vor Nässe beziehungsweise Fremdkörpern, wie beispielsweise Steinen oder Ästen beziehungsweise deren Impaktion und dadurch Beschädigung geschützt werden. Zu diesen Komponenten 26 gehören beispielsweise Spannungsgleichrichter, Transformatoren oder andere Fahrzeugbauteile, welche vor Beschädigung zu schützen sind. Das Abdeckelement 22 ist am Unterbodenschutzelement 24 angeordnet und überdeckt den Aufnahmebereich 28 in Fahrzeughochrichtung 12 nach unten. Das Unterbodenschutzelement 24 weist einen Feldführungsbereich 30 mit jeweiligen Feldführungselementen 32 zur Verstärkung und Ausrichtung eines magnetischen Feldes beim induktiven Laden auf. Die Feldführungselemente 32 sind vorliegend mittels einer kreisförmigen Kontur angedeutet, jedoch ist klar, dass die Feldführungselemente 32, welche jeweilige Ferrite aufweisen, auch andere Konturen aufweisen können. Durch die spezielle Anordnung der Ferrite beziehungsweise der Feldführungselemente 32 kann eine besonders günstige Durchlässigkeit von sechsdimensionalen elektromagnetischen Feldern erreicht werden. Diese sechs Dimensionen setzen sich einerseits aus dem sich ändernden Magnetfeld und andererseits aus einem beim induktiven Laden ebenfalls auftretenden elektrischen Feld zusammen. Mit anderen Worten wird also anhand der Feldführungselemente 32, welche über den sich flächig über das Abdeckelement 22 erstreckenden Feldführungsbereich 30 verteilt sind, das Laden des hier nicht dargestellten Energiespeichers (Hochvoltbatterie) des Kraftwagens hinsichtlich des Ladewirkungsgrades erheblich verbessert. Mittels der Feldführungselemente 32 (Ferrite) kann die Induktionsspule 20 (Sekundärspule) somit auf besonders günstige Weise und mit hohem Ladewirkungsgrad induktiv mittels der Primärspule (nicht dargestellt) mit einem besonders exakt ausgerichteten elektromagnetischen Feld beaufschlagt werden.

Aus Fig. 1a, Fig. 1b und Fig. 1c geht des Weiteren hervor, dass in Fahrzeugquerrichtung 14 zu den jeweils gegenüberliegenden Seiten 16, 18 des Unterbodenschutzelements 24 jeweilige das Unterbodenschutzelement 24 in Fahrzeughochrichtung 12 nach unten überragende Kufen 40 an dem Unterboden 10 angeordnet sind. Mit anderen Worten weisen diese Kufen 40 somit einen geringeren Abstand zum hier nicht dargestellten Untergrund des Kraftwagens 70 auf als das Abdeckelement 22. Ist beispielsweise der Rampenwinkel einer Anhöhe, welche mittels des Kraftwagens 70 erklommen werden soll, derart groß, dass der Unterboden 10 des Kraftwagens 70 mit dem Untergrund in Kontakt tritt, so wird mittels der sowohl das Unterbodenschutzelement 24 als auch das Abdeckelement 22 überragenden Kufen 40 vermieden, dass das Unterbodenschutzelement 24 beziehungsweise das Abdeckelement 22 mit dem Untergrund in Kontakt treten. Durch die Kufen 40, weiche in Fahrtrichtung 50 ausgerichtet sind, wird also eine Beschädigung des Abdeckelements 22 beziehungsweise des Unterbodenschutzelements 24 vermieden, indem die Kufen 40 sozusagen als Abstandshalter zwischen dem Untergrund und dem Abdeckelement 22 beziehungsweise dem Unterbodenschutzelement 24 dienen. Es ist klar, dass sich die Kufen 40 entlang der gegenüberliegenden Seiten 16, 18 des Unterbodenschutzelements 24 in Fahrzeuglängsrichtung erstrecken, da die Kufen 40 ein Abgleiten des Kraftwagens 70 in Fahrtrichtung 50 auf dem Untergrund ermöglichen, sofern der Unterboden 10 des Kraftwagens 70 mit dem Untergrund in Kontakt tritt.

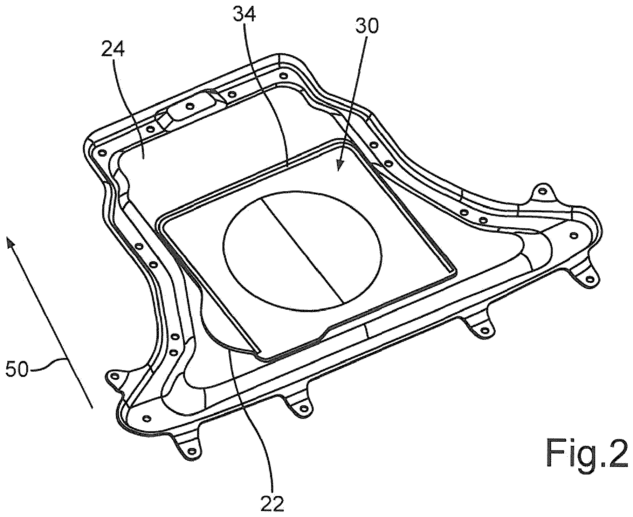

Anhand Fig. 2, Fig. 3a, Fig. 3b und Fig. 3c ist erkennbar, dass das Abdeckelement 22 durch einen das Abdeckelement 22 wenigstens bereichsweise umschließenden Rahmen 34 aufgenommen ist. Dabei zeigt Fig. 3b eine Schnittdarstellung des Unterbodenschutzelements 24 entsprechend einer Schnittlinie B-B in Fig. 3 a. Fig. 3 c zeigt eine Detailansicht in Schnittdarstellung gemäß eines in Fig. 3b markierten Bereichs Z.

Der Rahmen 34 kann einerseits als in das Abdeckelement 22 integrierter Metallrahmen (zum Beispiel Aluminiumrahmen) ausgebildet sein oder auch alternativ aus einem Stahlseil gebildet sein. Unabhängig davon, ob der Rahmen 34 als Metallrahmen oder als Stahlseil beziehungsweise metallisches Seil ausgebildet ist, kann der Rahmen 34 wie in Fig. 3 a erkennbar, teilweise um den Randbereich des Abdeckelements 22 umlaufend ausgebildet sein oder alternativ ein geschlossenes Profil bilden. Der Rahmen 34, welcher sowohl außen auf das Abdeckelement 22 aufgelegt sein kann als auch in das Material beziehungsweise den Werkstoff des Abdeckelements 22 integriert sein kann, dient dabei als zusätzlicher Schutz und somit als Stabilisator des Abdeckelements 22 beziehungsweise der darunterliegenden Induktionsspule gegenüber Beschädigung bei Kontakt mit dem Untergrund. Es ist klar, dass der Rahmen 34 zusätzlich oder alternativ zu den Kufen 40 an dem Unterboden 10 des Kraftwagens 70 angeordnet sein kann. Ist der Rahmen 34 als Stahlseil ausgebildet, so ergibt sich ein besonders guter Schutz der Induktionsspule 20 vor spitzen Gegenständen, welche den Unterboden 10 des Kraftwagens 70 aufreißen können. Dieser besonders gute Schutz entsteht nun dadurch, dass der spitze Gegenstand den Rahmen 34, also das Stahlseil, mitreißt, wodurch das Stahlseil durch das Material des Abdeckelements 22 hindurch gezogen wird und dadurch die Verformungsenergie, welche durch die Relativbewegung des spitzen Gegenstands zum Unterboden 10 des Kraftwagens 70 auftritt, auf eine besonders große Fläche des Abdeckelements 22 verteilt wird. Mit anderen Worten wird also anstatt eines tiefen und schmalen Risses durch den spitzen Gegenstand eine deutlich weniger tiefe und dafür großflächiger über dem Abdeckelement 22 verteilte Abschabung herbeigeführt. Ist das Abdeckelement 22 wie in diesem Ausführungsbeispiel aus einem glasfaserverstärktem Kunststoff (GFK) gebildet, so kann die auftretende Verformungsenergie besonders großflächig verteilt werden, da GFK als anisotroper Werkstoff derart gefertigt sein kann, dass in Fahrtrichtung 50 ein anderer Widerstand gegenüber Verformung vorliegt als in Fahrzeugquerrichtung 14.

Fig. 4 und Fig. 5 zeigen jeweils weitere Unteransichten auf den Unterboden 10 des Kraftwagens 70. Die Induktionsspule 20 ist vorliegend über eine Dreipunktlagerung am Schubfeld (Unterbodenschutzelement 24) am sogenannten Vorderwagen des Kraftwagens 70 verschraubt. Auf der Beifahrerseite ist ein WCU 60 (Wireless Control Unit) fixiert, mittels welchem der induktive Ladevorgang freigegeben werden kann und somit die Induktionsspule 20 für einen Ladevorgang aktiviert, beziehungsweise der Ladevorgang verweigert werden kann. Es ist klar, dass das WCU 60 auch in die Induktionsspule 20 integriert sein könnte und dementsprechend ebenfalls durch das Abdeckelement 22 geschützt werden könnte. Das WCU 60 dient somit als Diebstahlschutz, da damit das induktive Laden wirksam unterbunden werden kann.

## Patentansprüche

1. Kraftwagen mit wenigstens einer Induktionsspule (20) zum induktiven Laden eines Energiespeichers,
wobei die Induktionsspule (20) an einem Unterbodenschutzelement (24) eines Unterbodens (10) des Kraftwagens angebracht ist, das zum Schutz wenigstens einer Komponente (26) des Kraftwagens vorgesehen ist,
wobei das Unterbodenschutzelement (24) einen Aufnahmebereich (28) zumindest teilweise begrenzt, in welchem die Induktionsspule (20) zumindest teilweise aufgenommen ist,
und wobei die Induktionsspule (20) nach unten zumindest teilweise durch wenigstens ein Abdeckelement (22) überdeckt ist,
**dadurch gekennzeichnet,**
**dass** entlang der in Fahrzeugquerrichtung gegenüberliegenden Seiten (16, 18) des Unterbodenschutzelements (24) sich in Fahrzeuglängsrichtung erstreckende und nach unten überragende Kufen (40) an dem Unterboden (10) angeordnet sind.

2. Kraftwagen nach Anspruch 1, **dadurch gekennzeichnet, dass** das Abdeckelement (22) am Unterbodenschutzelement (24) angeordnet ist.

3. Kraftwagen nach einem der Ansprüche 1 bis 2, **dadurch gekennzeichnet, dass** das Unterbodenschutzelement (24) wenigstens einen Feldführungsbereich (30) mit jeweiligen Feldführungselementen (32) zur Verstärkung und Ausrichtung eines magnetischen Feldes beim induktiven Laden aufweist.

4. Kraftwagen nach Anspruch 3, **dadurch gekennzeichnet, dass** die Feldführungselemente (32) Ferrite aufweisen.

5. Kraftwagen nach einem der vorhergehenden Ansprüche, **dadurch gekennzeichnet, dass** das Abdeckelement (22) durch einen das Abdeckelement (22) wenigstens bereichsweise umschließenden Rahmen (34) aufgenommen ist.

## Claims

1. A motor vehicle with at least one induction coil (20) for inductively charging an energy accumulator,
wherein the induction coil (20) is attached to an underbody protection element (24) of an underbody (10) of the motor vehicle which is provided for protecting at least one component (26) of the motor vehicle,
wherein the underbody protection element (24) at least partially delimits a receiving region (28) in which the induction coil (20) is at least partially accommodated,
and wherein the induction coil (20) is covered downwards at least partially by at least one covering element (22),
**characterised in that**
runners (40) extending in the longitudinal direction of the vehicle and projecting downwards are arranged on the underbody (10) along the sides (16, 18) of the underbody protection element (24) which are located opposite in the transverse direction of the vehicle.

2. A motor vehicle according to Claim 1, **characterised in that** the covering element (22) is arranged on the underbody protection element (24).

3. A motor vehicle according to one of Claims 1 to 2, **characterised in that** the underbody protection element (24) has at least one field-guiding region (30) with respective field-guiding elements (32) for intensifying and orienting a magnetic field during inductive charging.

4. A motor vehicle according to Claim 3, **characterised in that** the field guidance elements (32) comprise ferrites.

5. A motor vehicle according to one of the preceding claims, **characterised in that** the covering element (22) is accommodated by a frame (34) which surrounds the covering element (22) at least in regions.

## Revendications

1. Véhicule automobile comportant au moins une bobine d'induction (20) permettant la charge par induction d'un accumulateur d'énergie, la bobine d'induction (20) étant installée sur un élément de protection (24) du dessous de caisse (10) du véhicule qui est prévu pour garantir la protection d'au moins un composant (26) du véhicule,
l'élément de protection du dessous de caisse (24) limitant au moins partiellement une zone de réception (28) dans laquelle est installée au moins partiellement la bobine d'induction (20), et
la bobine d'induction (20) étant recouverte par en dessous au moins partiellement par au moins un élément de recouvrement (22), **caractérisé en ce que**
le long des côtés (16, 18) de l'élément de protection du dessous de caisse (24) opposés dans la direction longitudinale du véhicule sont installés sur le dessous de caisse (10) des patins (40) s'étendant dans la direction longitudinale du véhicule et faisant saillie vers le bas.

2. Véhicule automobile conforme à la revendication 1,
**caractérisé en ce que**
l'élément de recouvrement (22) est installé sur l'élément de protection (24) du dessous de caisse.

3. Véhicule automobile conforme à l'une des revendications 1 et 2,
**caractérisé en ce que**
l'élément de protection du dessous de caisse (24) comporte au moins une zone de guidage de champ (30) ayant des éléments de guidage de champ (32) respectifs permettant de renforcer et d'orienter le champ magnétique lors d'une charge par induction.

4. Véhicule automobile conforme à la revendication 3,
**caractérisé en ce que**
les éléments de guidage du champ (32) renferment de la ferrite.

5. Véhicule automobile conforme à l'une des revendications précédentes,
**caractérisé en ce que**
l'élément de recouvrement (22) est logé dans un cadre (34) entourant au moins par zones cet élément de recouvrement (22).
